# EUROPÄISCHE PATENTSCHRIFT

(11) **EP 0 900 156 B1**
(45) Veröffentlichungstag und Bekanntmachung des Hinweises auf die Patenterteilung: **07.03.2001**
(21) Anmeldenummer: 97923785.6
(22) Anmeldetag: 02.05.1997
(51) Int. Cl.: B60R 21/16

(54) **Gassack, Verfahren zu dessen Faltung und Vorrichtung zur Durchführung des Verfahrens**
Airbag, method of folding the latter, and device for carrying out the method
Sac gonflable, procédé permettant de le plier et dispositif de mise en oeuvre dudit procédé

(30) Priorität: 28.05.1996 DE 19623041; 14.01.1997 DE 19702799
(43) Veröffentlichungstag der Anmeldung: 10.03.1999
(73) Patentinhaber: Petri AG, 63743 Aschaffenburg (DE)
(72) Erfinder: DIETSCH, Andrea, D-55288 Schornsheim (DE); RADTKE, Gerd, D-13055 Berlin (DE); OSE, Falk, D-13189 Berlin (DE)
(74) Vertreter: Bärmann, Klaus, Dipl.-Ing.
(86) Internationale Anmeldenummer: DE9700918
(87) Internationale Veröffentlichungsnummer: WO9745296

(56) Entgegenhaltungen:
- DE-C- 19 502 744
- DE-C- 19 516 494
- US-A- 5 300 011
- US-A- 5 360 387

## Beschreibung

Die Erfindung betrifft einen Gassack nach dem Oberbegriff des Anspruchs 1 sowie ein Verfahren zur Faltung und eine Vorrichtung zur Durchführung des Verfahrens (s. zum Beispiel US-A-5 360 387).

Um einen Gassack in einem Airbagmodul verstauen zu können, ist es bekannt, diesen zu einem entsprechend kleinen Paket zu falten. Es sind verschiedene Faltungsarten bekannt geworden. So sind aus der US-PS 4 173 356 unterschiedliche gradlinige Faltungsarten bekannt, wobei die Falten strahlenförmig von einem Zentrum nach außen oder annähernd parallel zueinander verlaufen. Diese Falten weisen den Nachteil auf, daß sie zumindest bei Anwendung in einem Fahrer-Airbagmodul so zusammengelegt werden müssen, daß beim Entfalten eines derartigen Gassackes der in Teilbereichen des Gassackes erzeugte Innendruck das Öffnen einiger Falten verhindert. Weiterhin ist der Aufwand für die Faltung erheblich.

Aus der DE 44 22 276 A1 ist ein Gassack für ein Airbagmodul bekannt, bei dem der Gassack Hauptfalten aufweist, die zumindest zu einem Teil entlang geschlossener Bahnen um ein gedachtes Zentrum auf dem im wesentlichen leeren, ausgebreiteten Gassack herum verlaufen. Die geschlossenen Hauptfalten beschreiben vorzugsweise Kreisbahnen oder Ellipsen geringer Exzentrizität.

Dieser Verlauf der Hauptfalten weist den Vorteil auf, daß sich der gefaltete Gassack sehr schnell und einfach öffnen kann. Insbesondere besteht beim Entfalten eines derartigen Gassackes nicht die Gefahr, daß der in Teilbereichen des Gassackes erzeugte Innendruck das Öffnen weiterer Falten verhindert. Dabei ist dieser Gassack für Fahrer-, Beifahrer- und Seitenairbags einsetzbar. Der Nachteil dieser Faltung besteht darin, daß der Aufwand für die maschinelle Faltung groß ist.

Aus der WO 96/34781 ist ein Verfahren zur Faltung eines Airbags bekannt, bei dem der Airbag vor dem Falten in seine Gebrauchsform gebracht wird. Mittels mechanischer Falthilfen wird er anschließend so eingefaltet, daß zumindest die im ersten Faltschritt gebildeten Faltflächen des gefalteten Gassacks in Bezug auf den Gasgenerator derart einlagig angeordnet werden, daß das ausströmende Gas ohne vorheriges Umströmen anderer Faltflächen unmittelbar auf die im ersten Faltschritt gebildeten Faltflächen des gefalteten Airbags wirkt.

Der Nachteil dieses Verfahrens ist ebenfalls der große Aufwand für die maschinelle Faltung.

Der Erfindung liegt deshalb die Aufgabe zugrunde, den Gassack so zu falten, daß er sich einerseits leicht und vollständig entfaltet und daß andererseits der Aufwand für das Falten des Gassackes verringert wird.

Erfindungsgemäß wird das gemäß den Merkmalen der Ansprüche 1, 6 und 13 erreicht.

Der Gassack weist erfindungsgemäß in gefalteter Lage mindestens eine durchgehende Einschnürung, d.h., einen eingedrückten Abschnitt sowie geordnet und/oder chaotisch verlaufende Falten auf, wobei sich die Einschnürung senkrecht zur Ebene des ausgebreiteten ungefalteten Gassackes durch diesen erstreckt. Insbesondere ist vorgesehen, daß die Falten in den durch die Einschnürung unterteilten Bereichen des Gassackes ohne Überlappung der Einschnürung getrennt verlaufen. Bei einem Gassack mit Ober- und Unterseite erstreckt sich die Einschnürung von der Ober- zur Unterseite des Gassackes.

Der Vorteil dieser Einschnürung besteht darin, daß sie sich positiv insbesondere auf die chaotische Faltung auswirkt. Der bei chaotischer Faltung bestehende Nachteil, das sich Bereiche des Gassacks überlappen, wodurch die Entfaltung des Gassackes behindert wird, ist durch das Vorsehen mindestens einer Einschnürung weitestgehend beseitigt. Weiterhin besteht der Vorteil, daß sich für unterschiedliche Formen des Airbagmoduls durch eine oder mehrere Einschnürungen eine den unterschiedlichen Formen angepaßte Verteilung der Falten erreichen läßt. Der zur Verfügung stehende Raum für den gefalteten Gassack kann optimal ausgenutzt werden.

In Abhängigkeit von der gewählten Form des ausgebreiteten Gassackes kann es zweckmäßig sein, ein, zwei oder mehr Einschnürungen im Gassack vorzusehen. Der Gassack für ein Fahrerairbagmodul weist zweckmäßig vier Einschnürungen auf.

In einer weiteren Ausführungsform ist mindestens eine Einschnürung vorgesehen, die zwischen der Ober- und Unterseite des Gassackes verläuft. Bei dieser Ausführungsform sind wegen dieser Einschnürung Ober- und Unterteil des Gassacks zumindest teilsweise getrennt und beide Teile weisen auch getrennte Falten auf. Bei dieser Ausführungsform wirkt sich der Umstand, daß Falten des Oberteils nicht in Falten des Unterteils eingreifen, besonders vorteilhaft auf die allseitige und schnelle Entfaltung des Gassackes aus. Weiterhin werden bei der Einschnürung Gassack- Außen - bereiche nach innen in die Nähe des Gasgenerators oder Diffusors verlagert. Dadurch wird bei der Entfaltung des Gassacks neben der beschleunigten Ausbreitung in der Hauptentfaltungsrichtung eine Ausbreitung senkrecht dazu erreicht. Durch die Wahl der Anordnung, Anzahl und Tiefe der Einschnürungen kann eine Entfaltung gezielt in bestimmte Richtungen gesteuert werden.

Ein Verfahren zur Faltung eines Gassackes ist erfindungsgemäß dadurch gekennzeichnet, daß der ausgebreitete Gassack an mindestens einer Seite mindestens einmal senkrecht zur Ebene des ausgebreiteten Gassacks eingeschnürt wird und daß er anschließend auf das für das Verstauen im Airbagmodul notwendige Maß gefaltet und/oder zusammengedrückt wird, wobei die Einschnürung erhalten bleibt.

Es ist zweckmäßig, daß der Gassack in Bereichen, die durch eine Einschnürung getrennt sind, getrennt gefaltet wird.

In einer ersten Ausführungsform wird bei einem Gassack, der eine Ober- und eine Unterseite aufweist, der Gassack von der Ober- bis zur Unterseite eingeschnürt.

Das im ersten Schritt durchgeführte Einschnüren stellt eine Vorfaltung für die sich anschließende geordnete oder chaotische Faltung dar. Diese Verfahrensschritte ermöglichen eine maschinentechnisch einfache Umsetzung, da die Erzeugung einer Einschnürung und das Zusammendrücken des so vorgefalteten Gassackes einfache Vorgänge sind.

Der Gassack wird an einer Seite oder an mehreren Seiten eingeschnürt. Der Gassack für ein Beifahrerairbagmodul wird zweckmäßig von einer Seite her eingeschnürt. Dadurch weist der ausgebreitete, nur mit der einen Einschnürung versehene Gassack vor dem Zusammendrücken die Form eines menschlichen Backenzahns mit zwei Wurzeln auf.

Der Gassack für ein Fahrerairbagmodul wird zweckmäßig von vier Seiten her eingeschnürt, wobei die Einschnürung vorzugsweise gleichzeitig erfolgt. Dadurch weist der ausgebreitete, nur mit den vier Einschnürungen versehene Gassack vor dem Zusammendrücken die Form eines vierblättrigen Kleeblattes auf.

Beim Falten und Zusammendrücken des Gassackes bewirken die vorher eingebrachten Einschnürungen, daß sich die erzeugten geordneten und/oder chaotischen Falten jeweils nur innerhalb des durch die Einschnürungen abgegrenzten Bereiches ausbilden, d.h. die Falten überlappen nicht die Einschnürungen. Überlappungen insbesondere der chaotischen Falten werden dadurch weitestgehend vermieden. Die Einschnürungen sind auch nach dem chaotischen Falten erhalten.

In einer weiteren Ausführungsform ist vorgesehen, daß der Gassack zwischen seiner Ober- und Unterseite eingeschnürt wird und daß anschließend beide Seiten getrennt gefaltet und/oder zusammengedrückt werden.

Eine Vorrichtung zur Faltung eines Gassacks ist erfindungsgemäß dadurch gekennzeichnet, daß je ein Werkzeug für die Erzeugung je einer Einschnürung vorgesehen ist, das sich senkrecht zur Ebene des ausgebreiteten Gassacks erstreckt, daß der ausgebreitete Gassack und das Werkzeug in der Ebene des ausgebreiteten Gassacks zueinander verschiebbar sind und daß oberhalb und/oder seitlich des ausgebreiteten Gassacks Faltwerkzeuge und/oder schieberartige Werkzeuge für das Zusammendrücken des Gassacks auf Staugröße vorgesehen sind.

Vorzugsweise erstreckt sich das Werkzeug mindestens über die Höhe des Gassackes in seiner gefalteten Lage.

Für die Erzeugung der Einschnürung kann vorteilhaft ein schwertähnliches Werkzeug vorgesehen sein. Dieses Werkzeug weist mindestens eine Höhe auf, die der vorgesehenen Höhe des gefalteten Gassackes entspricht, so daß der Gassack beim seitlichen Einschieben des Werkzeuges in den Gassack über die gesamte Höhe eingeschnürt wird.

In einer weiteren Ausführungsform ist für die Erzeugung der Einschnürung ein drahförmiges Werkzeug vorgesehen, das sich im wesentlichen senkrecht zur Ebene des ausgebreiteten Gassacks erstreckt.

In bevorzugten Ausführungsformen ist vorgesehen, daß für die Erzeugung je einer Einschnürung je ein schwertförmiges oder drahtförmiges Werkzeug vorgesehen ist.

Es ist zweckmäßig für die Vorfaltung eines Gassackes für ein Beifahrerairbagmodul ein Werkzeug vorzusehen, so daß bei dessen Betätigung eine Einschnürung erzeugt wird. Für die Vorfaltung eines Gassackes für ein Fahrerairbagmodul ist es zweckmäßig, vier Werkzeuge vorzusehen, so daß bei deren Betätigung vier Einschnürungen erzeugt werden.

Diese schwert- oder drahtförmigen Werkzeuge sowie die schieberartigen Werkzeuge für das Zusammendrücken des Gassackes sind in bekannter Weise maschinentechnisch einfach zu betätigen, wodurch eine hohe Prozeßsicherheit erreicht wird.

Eine weitere Ausgestaltung des Werkzeugs ist dadurch gekennzeichnet, daß ein Raum für die Faltung des Gassackes zwischen einer unteren Deckplatte und einer oberen Deckplatte vorgesehen ist, von denen eine bewegbar ist, daß das schwertförmige Werkzeug zwischen den Deckplatten und senkrecht zu diesen verläuft, daß der Raum für die Faltung des Gassackes seitlich durch Schieber begrenzt ist, die zwischen den Deckplatten verschiebbar sind, daß in der unteren Deckplatte eine Öffnung für ein Airbaggehäuse vorhanden ist und daneben mindestens ein senkrecht bezüglich der Deckplatten bewegbarer Schieber vorgesehen ist, und daß in der oberen Deckplatte im Bereich des Airbaggehäuses eine Öffnung vorgesehen ist, in der ein senkrecht zu den Deckplatten bewegbarer und entfernbarer Packstempel angeordnet ist, in dem ein senkrecht zu den Deckplatten bewegbarer Platzhalter vorhanden ist.

Der Platzhalter weist senkrecht zur Bewegungsrichtung etwa den Querschnitt eines Kamins eines im Airbaggehäuse eingesetzten Diffusors auf.

Die Erfindung soll in Ausführungsbeispielen anhand von Zeichnungen erläutert werden, Es zeigen:
- Fig. 1: eine Ansicht von unten auf einen ausgebreiteten Gassack für ein Beifahrerairbagmodul und ein zugeordnetes schwertförmiges Werkzeug;
- Fig. 2: den Gassack nach Fig. 1 mit Einschnürung und den zugeordneten Werkzeugen für das Zusammendrücken des Gassacks;
- Fig. 3: einen Schnitt durch die Fig. 2 gemäß der Linie III-III;
- Fig. 4: den gefalteten Gassack;
- Fig. 5: eine Ansicht von unten auf einen ausgebreiteten Gassack für ein Beifahrerairbagmodul mit zwei zugeordneten schwertförmigen Werkzeugen;
- Fig. 6: den Gassack nach Fig. 5 mit Einschnürungen;
- Fig. 7: eine Draufsicht auf einen Gassack für ein Fahrerairbagmodul mit einem zugeordneten schwertförmigen Werkzeug;
- Fig. 8: den Gassack nach Fig. 7 mit einer Einschnürung;
- Fig. 9: eine Ansicht von unten auf einen ausgebreiteten Gassack für ein Fahrerairbagmodul mit zugeordneten schwertförmigen Werkzeugen;
- Fig. 10: den Gassack nach Fig. 9 mit Einschnürungen und den Werkzeugen für das Zusammendrücken des Gassackes;
- Fig. 11: den gefalteten Gassack nach Fig. 9;
- Fig. 12: eine Ansicht von unten auf einen ausgebreiteten Gassack mit Einschnürungen und zugeordneten drahtförmigen Werkzeugen für die Erzeugung der Einschnürungen;
- Fig. 13: eine Ansicht von unten auf einen ausgebreiteten kreisförmigen Gassack;
- Fig. 14: eine Draufsicht auf ein Werkzeug, teilweise geschnitten für das Einschnüren des Gassacks parallel zur Ebene des ausgebreiteten Gassacks;
- Fig. 15: einen Schnitt durch das Werkzeug nach Fig. 14 in Richtung der Pfeile XIV - XIV;
- Fig. 16: das Werkzeug nach Fig. 15 mit gefaltetem Gassack;
- Fig. 17: einen Schnitt durch eine weitere Ausführungsform eines Werkzeugs;
- Fig. 18: einen Draufsicht auf das Werkzeug nach Fig. 17;
- Fig 19-21: das Werkzeug nach Fig. 17 in aufeinanderfolgenden Stufen der Gassackfaltung:

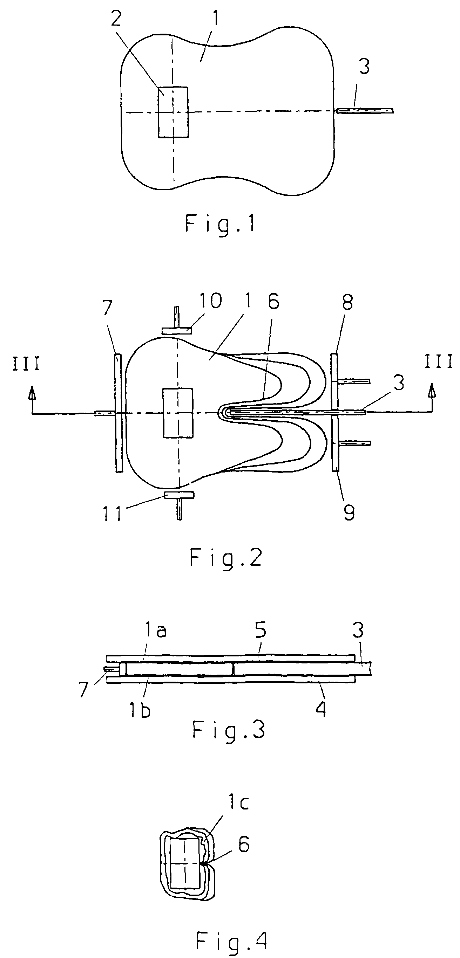

In der Fig. 1 ist ein ausgebreiteter Gassack 1 dargestellt, der einen Einblasmund 2 für einen Rohrgasgenerator aufweist. Für den Fall, daß der Rohrgasgenerator im Gassack angeordnet ist, sollte er vor dem Faltvorgang montiert sein. Dem ausgebreiteten Gassack ist ein schwertförmiges Werkzeug 3 zugeordnet. Der ausgebreitete Gassack liegt auf einer Unterlage 4 und ist oben mit einem in der Höhe verstellbaren Deckel 5 abgedeckt (Fig. 3). Der Abstand zwischen der Unterlage und dem Deckel entspricht dabei der gewünschten Höhe des gefalteten Gassackes. Im Ausführungsbeispiel liegt die Oberseite 1b auf der Unterlage 4 und die Unterseite 1a mit dem Einblasmund 2 oben.

Vor den Faltvorgängen wird der Gassack auf der Unterlage ausgebreitet und glatt gestrichen. Anschließend wird der Deckel 5 auf den erforderlichen Abstand an die Unterlage herangebracht. Der erste und wesentliche neue Schritt der Faltvorgänge besteht nun darin, daß das schwertförmige Werkzeug 3 zwischen der Unterlage 4 und dem Deckel 5 gegen den Gassack 1 bewegt wird. Mit Hilfe dieses Werkzeugs wird eine Einschnürung 6 erzeugt, wie es in Fig. 2 dargestellt ist. Der Gassack weist dann die aus Fig. 2 erkennbare Form eines Zahnes mit zwei Wurzeln auf. Die Einschnürung stellt eine Vororientierung für die sich anschließende chaotische Faltung des Gassackes dar. Hierzu wird der Gassack im Anschluß an die Erzeugung der Einschnürung mittels Schieber 7 bis 11 zusammengedrückt. Im vorliegenden Ausführungsbeispiel wird der Gassack zuerst durch die Schieber 7, 8 und 9 in einer Richtung zusammengedrückt und anschließend durch die Schieber 10 und 11 senkrecht dazu auf die erforderliche Größe zusammengedrückt.

Nach dem Zusammendrücken weist der chaotisch gefaltete Gassack die in der Fig. 4 dargestellte Form auf. Es ist erkennbar, daß die Einschnürung 6 während des Zusammendrückens und nach Abschluß des Zusammendrückens erhalten bleibt, so daß voneinander getrennte gefaltete Bereiche mit chaotischen Falten lc vorhanden sind. Dadurch ist die Gefahr des Überlappens von Gassackteilen beim Zusammendrücken wesentlich herabgesetzt.

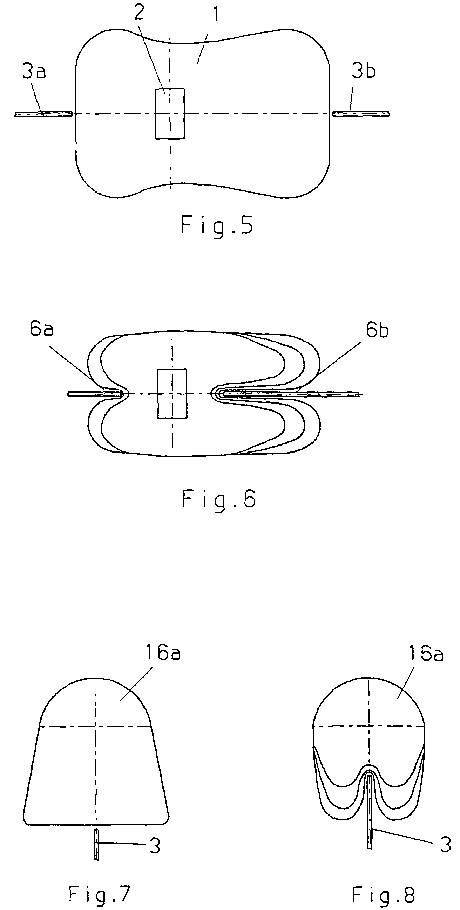

In den Figuren 5 und 6 ist die Erzeugung von zwei Einschnürungen 6a, 6b mittels zweier schwertförmiger Werkzeuge 3a und 3b dargestellt. Nach deren Einwirkung auf den Gassack weist der Gassack die in Fig. 6 dargestellte zweiseitig eingeschnürte Form auf.

In der Fig. 7 ist ein ausgebreiteter Gassack 16a für ein Fahrerairbagmodul dargestellt, der mittels eines schwertförmigen Werkzeugs 3 in der in Fig. 8 dargestellten Form einseitig gefaltet wird.

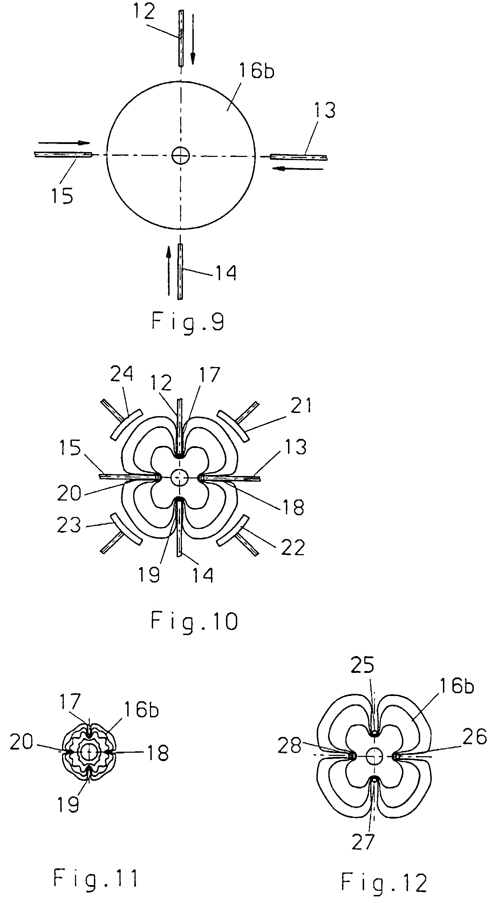

In den Figuren 9 bis 11 ist dargestellt, wie mittels vier schwertförmiger Werkzeuge 12 bis 15 ein Gassack 16b vorgefaltet wird. Wie bei den vorhergehenden Ausführungsbeispielen wird der Gassack 16b auf einer nicht dargestellten Unterlage ausgebreitet und von einem Deckel im erforderlichen Abstand zur Unterlage abgedeckt. Anschließend werden mittels der schwertförmigen Werkzeuge Einschnürungen 17 bis 20 in den Gassack eingebracht. Der Gassack weist dann die aus Fig. 10 erkennbare Form eines vierblättrigen Kleeblattes auf. Danach wird der Gassack mittels der Schieber 21 bis 24 zusammengedrückt, d.h. es wird eine chaotische Faltung vorgenommen.

Nach dem Zusammendrücken weist der Gassack die in Fig. 11 dargestellte Form auf. Es ist erkennbar, daß auch in diesem Fall nach dem Falten die Einschnürungen 17 bis 20 vorhanden sind. Durch die Unterteilung des Gassackes mittels der Einschnürungen in vier Teilbereiche ist beim Zusammendrükken die Gefahr des Überlappens von Falten wesentlich herabgesetzt.

Beim Ausführungsbeispiel der Fig. 12 sind anstelle der schwerterförmigen Werkzeuge zur Erzeugung der Einschnürungen drahtförmige Werkzeuge 25 bis 28 vorgesehen. Diese sind in der Fig. 12 im Querschnitt dargestellt und erstrecken sich durch Schlitze in der nicht dargestellten Unterlage und in dem nicht dargestellten Deckel und werden durch einen nicht dargestellten, an sich bekannten Antrieb gegenüber dem Gassack verschoben. Das Zusammendrücken des Gassackes auf die für die Verstauung im Airbagmodul notwendige Größe erfolgt in der Weise, wie sie beim Ausführungsbeispiel der Figuren 9 bis 11 dargestellt worden ist.

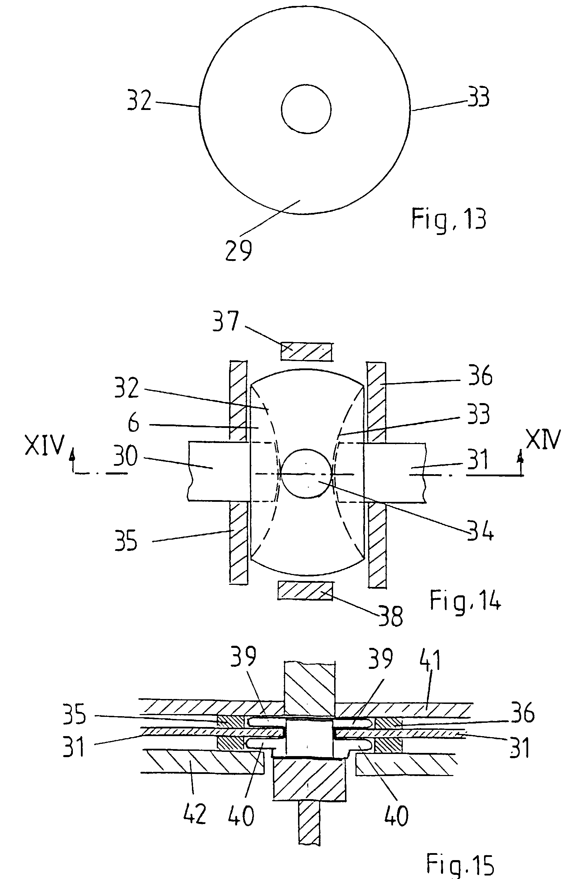

In der Fig. 13 ist ein Gassack 29 in ausgebreiter Lage dargestellt, der parallel zur Ausbreitungsebene eingeschnürt und anschließend zusammengerafft werden soll. Wie aus der Fig. 14 ersichtlich ist, sind zwei schieberförmige Werkzeuge 30, 31 vorgesehen, mittels derer die Außenbereiche 32, 33 des Gassackes 29 bis zu einem Gasgenerator 34 eingeschürt werden, so daß sie die in Fig. 14 dargestellte Lage haben. Aus dieser Figur sind weiterhin Raffschieber 35 bis 38 erkennbar.

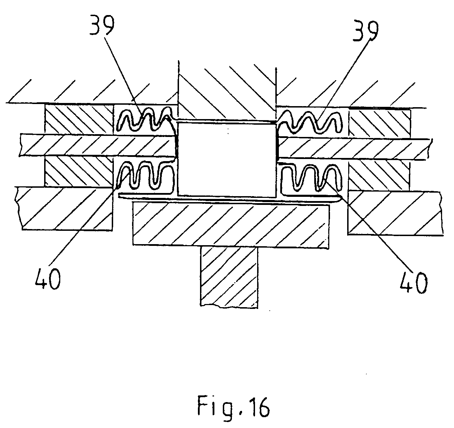

Wie aus der Fig. 15 erkennbar ist, weist der Gassack im Bereich der Einschnürungen Oberteile 39 und Unterteile 40 auf, die anschließend mittels der Raffschieber 35 bis 38 chaotisch gefaltet werden, die oben und unten von Deckplatten 41, 42 begrenzt sind, wobei mindestens eine Deckplatte zur Öffnung des Faltraumes bewegbar sein sollte.

Aus der Fig. 16 ist erkennbar, daß durch die Raffelemente eine getrennte Faltung der Oberteile 39 und der Unterteile 40 vorgenommen wird, wodurch sich die oben genannnten Vorteile ergeben.

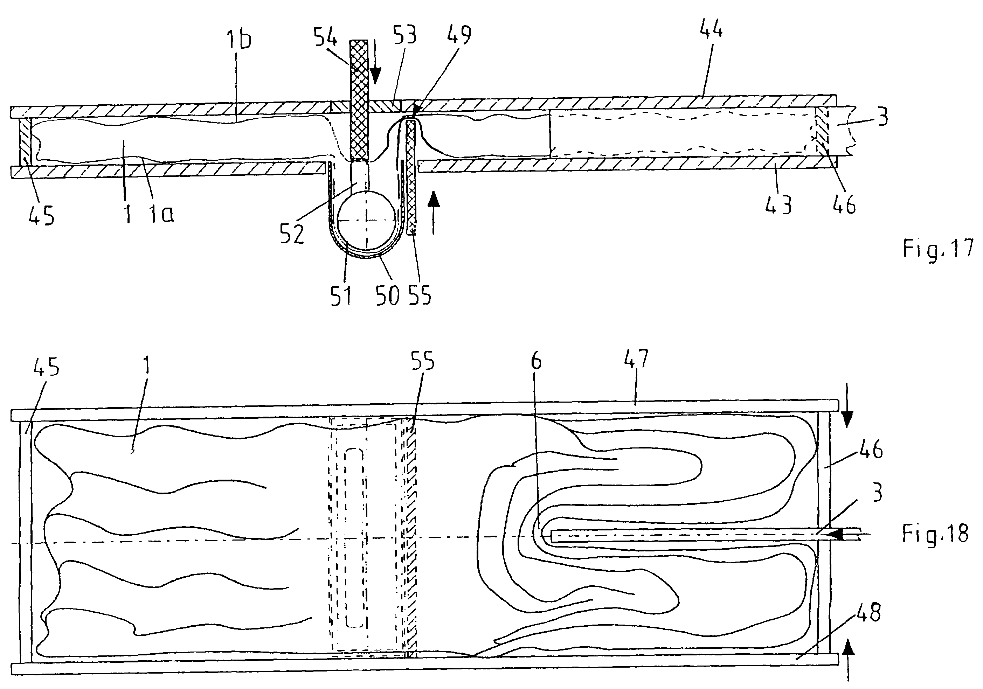

In der Fig. 17 ist ein Schnitt durch ein Werkzeug dargestellt, das wie die Ausführungsform der Fig. 1 ein schwerförmiges Werkzeug 3 aufweist. Dieses ist zwischen einer unteren Deckplatte 43 und einer oberen Deckplatte 44 geführt und verläuft senkrecht zu diesen. In der unteren Deckplatte 43 ist ein Ausschnitt für die Aufnahme eines Gehäuses 50 vorgesehen, in das der mit dem Diffusor 51 versehene Gassack einsetzbar ist. Der Diffusor weist einen Kamin 52 auf, der nicht dargestellte Austrittsöffnungen für das aus dem Gasgenerator austretende Gas aufweist. Der Gasgenerator wird vor oder nach dem Falten des Gassacks im Diffusor befestigt. In dem Ausschnitt in der oberen Deckplatte 44 ist ein Packstempel 53 positioniert, in dem ein Platzhalter 54 geführt ist, dessen Querschnitt in Bewegungsrichtung etwa dem Querschnitt des Kamins 52 entspricht. Wie in Fig. 17 dargestellt ist, liegt der Platzhalter 54 auf dem Kamin 52 auf, wobei zwischen beiden nur die Oberseite 1b des Gassacks 1 fixiert ist, und der Raum über dem Kamin während des gesamten Faltprozesses frei gehalten wird, so daß die Oberseite im Bereich des Kamins 52 getrennt von der Unterseite la verläuft. Der getrennte Verlauf wird seitlich des Kamins 52 durch einen Schieber 55 gewährleistet, der verhindert, daß sich die Ober- und Unterseite beim Falten des Gassackes überlappen.

Seitlich wird der Raum zwischen den Deckplatten von Schiebern 45 bis 48 begrenzt. In den Figuren 17 und 18 ist der Gassack 1 bereits teilweise gefaltet, indem durch das schwertförmige Werkzeug 3 eine Einschnürung 6 erzeugt wurde und der Gassack mittels der Schieber 47, 48 auf die für das Verstauen erforderliche Breite gebracht wurde.

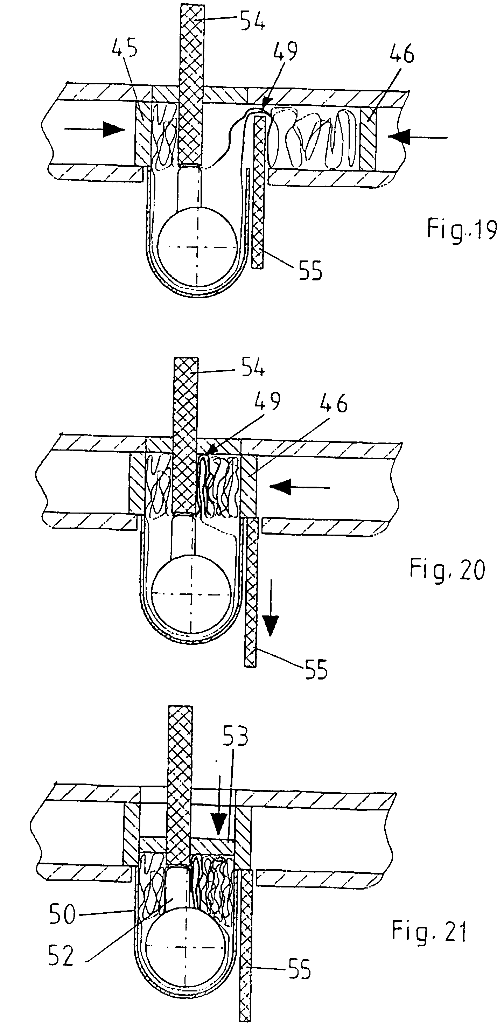

Nachdem der Gassack in der in den Figuren 17 und 18 dargestellten Art vorgefaltet wurde, wird er mittels der Schieber 45 und 46 weiter zusammengerafft. In der Fig. 19 befindet sich der Schieber 45 in seiner Endposition. Der Gassack ist links komplett chaotisch gefaltet. Der Schieber 46 hat eine Zwischenposition erreicht und dabei das rechte Gassackteil chaotisch vorgefaltet. Dabei bleibt eine durch den Schieber 55 definierte Falte 49 erhalten.

Für den weiteren Faltvorgang wird der Schieber 55 aus dem Raum zwischen den Deckplatten 43 und 44 zurückgezogen und der Schieber 46 in seine Endposition gebracht, wie es in Fig. 20 dargestellt ist. Auch in diesem Faltzustand bleibt die Falte 49 und damit die getrennte Lage des Unterteils la und des Oberteils 1b zwischen dem Platzhalter und dem Kamin einerseits und der Falte 49 andererseits erhalten.

Nach Beendigung des Raffvorganges wird der geraffte Gassack mittels des Packstempels 53 am Kamin 52 vorbei in das Gehäuse 50 gedrückt, wie es in Fig. 21 dargestellt ist.

Mit dieser Ausführungsform des Werkzeugs wird neben einer getrennten Faltung durch Verwendung des schwertförmigen Werkzeugs erreicht, daß sich im Bereich des Diffusors und insbesondere im Bereich der dort vorgesehenen Ausströmöffnungen Ober- und Unterteil des Gassackes nicht überlappen. Dadurch wird das Öffnungsverhalten des Gassacks zusätzlich positiv beeinflußt.

## Patentansprüche

1. Gassack für ein Airbagmodul,
**dadurch gekennzeichnet,**
daß der Gassack (1) in gefalteter Lage mindestens eine durchgehende Einschnürung (6), d.h. einen eingedrückten Abschnitt, sowie geordnet und/oder chaotisch verlaufende Falten (lc) aufweist, wobei sich die Einschnürung senkrecht zur Ebene des ausgebreiteten ungefalteten Gassackes (1) durch diesen erstreckt.

2. Gassack nach Anspruch 1, **dadurch gekennzeichnet,** daß die Falten in den von der Einschnürung unterteilten Bereichen des Gassackes, ohne die Einschnürung zu überlappen, getrennt verlaufen.

3. Gassack nach Anspruch 1 oder 2, **dadurch gekennzeichnet,** daß sich die Einschnürung (6) von der Oberseite zur Unterseite des Gassacks erstreckt.

4. Gassack nach mindestens einem der vorhergehenden Ansprüche, **dadurch gekennzeichnet,** daß der Gassack (1) eine Einschnürung (6) aufweist.

5. Gassack nach mindestens einem der Ansprüche 1 bis 3, **dadurch gekennzeichnet,** daß der Gassack (1, 16b) zwei oder mehrere Einschnürungen (6a, 6b, 17, 18, 19, 20) aufweist.

6. Verfahren zur Faltung eines Gassacks, insbesondere zur Erzielung eines Gassacks nach Anspruch 1 bis 5, **dadurch gekennzeichnet,** daß der ausgebreitete Gassack an mindestens einer Seite mindestens einmal senkrecht zur Ebene des ausgebreiteten Gassacks eingeschnürt wird und daß er anschließend auf das für das Verstauen im Airbagmodul notwendige Maß gefaltet und/oder zusammengedrückt wird, wobei die Einschnürung erhalten bleibt.

7. Verfahren zur Faltung nach Anspruch 6, **dadurch gekennzeichnet**, daß der Gassack in Bereichen, die durch eine Einschnürung getrennt sind, getrennt gefaltet wird.

8. Verfahren nach Anspruch 6 oder 7, **dadurch gekennzeichnet,** daß der Gassack von der Ober- bis zur Unterseite eingeschnürt wird.

9. Verfahren nach mindestens einem der Ansprüche Anspruch 6 bis 8, **dadurch gekennzeichnet,** daß der Gassack auf einer Seite eingeschnürt wird.

10. Verfahren nach mindestens einem der Ansprüche 6 bis 9, **dadurch gekennzeichnet,** daß der Gassack auf mehreren Seiten eingeschnürt wird.

11. Verfahren nach Anspruch 10, **dadurch gekennzeichnet,** daß die Einschnürung auf allen Seiten gleichzeitig erfolgt.

12. Verfahren nach mindestens einem der Ansprüche 6 bis 11, **dadurch gekennzeichnet,** daß der Gassack zwischen seiner Ober- und Unterseite eingeschnürt wird.

13. Vorrichtung zur Faltung eines Gassacks, insbesondere zur Erzielung eines gefalteten Gassacks nach den Ansprüchen 1 bis 5 und zur Durchführung des Verfahrens nach den Ansprüchen 6 bis 12, **dadurch gekennzeichnet,** daß mindestens ein Werkzeug (3, 3a, 3b, 12, 13, 14, 15, 25, 26, 27, 28) für die Erzeugung je einer Einschnürung (6) vorgesehen ist, das sich senkrecht zur Ebene des ausgebreiteten Gassacks erstreckt, daß der ausgebreitete Gassack (1) und das Werkzeug (3, 3a, 3b, 12, 13, 14, 15, 25, 26, 27, 28) in der Ebene des ausgebreiteten Gassacks zueinander verschiebbar sind und daß oberhalb und/oder seitlich des ausgebreiteten Gassacks Faltwerkzeuge und/oder schieberartige Werkzeuge (5, 7, 8, 9, 10, 11) für das Zusammendrücken des Gassacks auf Staugröße vorgesehen sind.

14. Vorrichtung nach Anspruch 13, **dadurch gekennzeichnet,** daß sich das Werkzeug mindestens über die Höhe des Gassackes (1) in seiner gefalteten Lage erstreckt.

15. Vorrichtung nach mindestens einem der vorhergehenden Ansprüche, **dadurch gekennzeichnet,** daß für die Erzeugung je einer Einschnürung (6, 6a, 6b, 17, 18, 19, 20) je ein schwertförmiges Werkzeug (3, 3a, 3b, 12, 13, 14, 15) vorgesehen ist.

16. Vorrichtung nach mindestens einem der vorhergehenden Ansprüche, **dadurch gekennzeichnet,** daß für die Erzeugung je einer Einschnürung je ein drahtförmiges Werkzeug (25, 26, 27, 28) vorgesehen ist.

17. Vorrichtung nach mindestens einem der vorhergehenden Ansprüche, **dadurch gekennzeichnet,** daß ein Raum für die Faltung des Gassackes zwischen einer unteren Deckplatte (43) und einer oberen Deckplatte (44) vorgesehen ist, von denen eine bewegbar ist, daß das schwertförmige Werkzeug (3) zwischen den Deckplatten und senkrecht zu diesen verläuft, daß der Raum für die Faltung des Gassackes seitlich durch Schieber (45 bis 48) begrenzt ist, die zwischen den Deckplatten verschiebbar sind, daß in der unteren Deckplatte (43) eine Öffnung für ein Airbaggehäuse (50) vorhanden ist und daneben mindestens ein senkrecht bezüglich der Deckplatten bewegbarer Schieber (55) vorgesehen ist, und daß in der oberen Deckplatte (44) im Bereich des Airbaggehäuses (50) eine Öffnung vorgesehen ist, in der ein senkrecht zu den Deckplatten bewegbarer und entfernbarer Packstempel (53) angeordnet ist, in dem ein senkrecht zu den Deckplatten bewegbarer Platzhalter (54) vorhanden ist.

18. Vorrichtung nach Anspruch 17, **dadurch gekennzeichnet,** daß der Platzhalter (54) senkrecht zur Bewegungsrichtung etwa den Querschnitt eines Kamins (52) eines im Airbaggehäuse (50) eingesetzten Diffusors (51) aufweist.

## Claims

1. Airbag for an airbag module, characterised in that the airbag (1) in the folded position has at least one continuous constriction (6), is an indented section as well as ordered and/or chaotic folds (lc) wherein the constriction extends perpendicular to the plane of the spread-out unfolded airbag (1) through same.

2. Airbag according to claim 1 characterised in that the folds run separately in the areas of the airbag divided by the constriction without overlapping the constriction.

3. Airbag according to claim 1 or 2 characterised in that the constriction (6) extends from the top side to the bottom side of the airbag.

4. Airbag according to at least one of the preceding claims characterised in that the airbag (1) has a constriction (6).

5. Airbag according to at least one of claims 1 to 3 characterised in that the airbag (1, 16b) has two or more constrictions (6a, 6b, 17, 18, 19, 20).

6. Method for folding an airbag more particularly for producing an airbag according to claims 1 to 5 characterised in that the spread-out airbag is restricted at least once on at least one side perpendicular to the plane of the spread-out airbag and that it is then folded and/or compressed to the size required for storage in the airbag module wherein the constriction remains set.

7. Method for folding according to claim 6 characterised in that the airbag is folded separately in areas which are separated by a constriction.

8. Method according to claim 6 or 7 characterised in that the airbag is constricted from the upper to the bottom side.

9. Method according to at least one of claims 6 to 8 characterised in that the airbag is constricted on one side.

10. Method according to at least one of claims 6 to 9 characterised in that the airbag is constricted on several sides.

11. Method according to claim 10 characterised in that the constriction is carried out simultaneously on all sides.

12. Method according to at least one of claims 6 to 11 characterised in that the airbag is constricted between its upper and lower sides.

13. Device for folding an airbag, more particularly for obtaining a folded airbag according to claims 1 to 5 and for carrying out the method according to claims 6 to 12 characterised in that at least one tool (3, 3a, 3b, 12, 13, 14, 15, 25, 26, 27, 28) is provided for producing each one constriction (6) which extends at right angles to the plane of the spread-out airbag, that the spread-out airbag (1) and the tool (3, 3a, 3b, 12 13, 14, 15, 25, 26, 27, 28) are displaceable relative to each other in the plane of the spread-out airbag and that above and/or at the side of the spread-out airbag folding tools and/or slider-like tools (5, 7 8, 9, 10, 11) are provided for compressing the airbag to the storage size.

14. Device according to claim 13 characterised in that the tool extends at least over the height of the airbag (1) in its folded position.

15. Device according to at least one of the preceding claims, characterised in that one sword-like tool (3, 3a, 3b, 12, 13, 14, 15) is provided each for producing each one constriction (6, 6a, 6b, 17, 18, 19, 20).

16. Device according to at least one of the preceding claims characterised in that one wire-like tool (25 26, 27, 28) each is provided for producing each one constriction.

17. Device according to at least one of the preceding claims characterised in that a space for folding the airbag is provided between a lower cover plate (43) and an upper cover plate (44) of which one is movable, that the sword-like tool (3) runs between the cover plates and at right angles to same, that the space for folding the airbag is restricted at the sides by sliders (45 to 48) which are movable between the cover plates, that in the lower cover plate (43) an opening is provided for an airbag housing (50) and next to this at least one slider (55) is provided which can be moved perpendicular relative to the cover plates, and that in the upper cover plate (44) an opening is provided in the area of the airbag housing (50) in which is mounted a removable packing ram (53) which is movable perpendicular to the cover plates and contains a place holder (54) movable perpendicular to the cover plates.

18. Device according to claim 17 characterised in that the place holder (54) has at right angles to the direction of movement roughly the cross-sectional shape of a flue (52) of a diffuser (51) inserted in the airbag housing (50).

## Revendications

1. Sac gonflable pour un module d'airbag, caractérisé en ce
que le sac gonflable (1) comporte, dans la position repliée, au moins un rétrécissement continu (6), c'est-à-dire une partie repoussée en renfoncement, ainsi que des plis (lc) disposés de façon ordonnée et/ou de façon chaotique, le rétrécissement s'étendant à travers le sac gonflable (1), perpendiculairement au plan de ce sac étalé et non replié.

2. Sac gonflable selon la revendication 1, caractérisé en ce que les plis s'étendent séparément, sans chevaucher le rétrécissement, dans les parties du sac gonflable délimitées par le rétrécissement.

3. Sac gonflable selon la revendication 1 ou 2, caractérisé en ce que le rétrécissement (6) s'étend depuis la face supérieure jusqu'à la face inférieure du sac gonflable.

4. Sac gonflable selon au moins l'une des revendications précédentes, caractérisé en ce que le sac gonflable (1) possède un rétrécissement (6).

5. Sac gonflable selon au moins l'une des revendications 1 à 3, caractérisé en ce que le sac gonflable (1, 16b) comporte deux ou un plus grand nombre de rétrécissements (6a, 6b, 17,18, 19, 20).

6. Procédé pour replier un sac gonflable, notamment pour obtenir un sac gonflable selon les revendications 1 à 5, caractérisé en ce qu'on rétrécit le sac gonflable étalé au moins d'un côté au moins une fois perpendiculairement au plan du sac gonflable étalé et qu'ensuite on le replie et/ou le comprime à un degré nécessaire pour son rangement dans le module d'airbag.

7. Procédé de repliage selon la revendication 6, caractérisé en ce qu'on replie séparément le sac gonflable dans des zones qui sont séparées par un rétrécissement.

8. Procédé selon la revendication 6 ou 7, caractérisé en ce qu'on rétrécit le sac gonflable depuis la face supérieure jusqu'au niveau de la face inférieure.

9. Procédé selon au moins l'une des revendications 6 à 8, caractérisé en ce qu'on rétrécit le sac gonflable d'un côté.

10. Procédé selon l'une des revendications 6 à 9, caractérisé en ce qu'on rétrécit le sac gonflable sur plusieurs côtés.

11. Procédé selon la revendication 10, caractérisé en ce que le rétrécissement s'effectue simultanément de tous côtés.

12. Procédé selon au moins l'une des revendications 6 à 11, caractérisé en ce qu'on rétrécit le sac à gaz entre sa face supérieure et sa face inférieure.

13. Dispositif pour replier un sac gonflable, notamment pour obtenir un sac gonflable replié selon les revendications 1 à 5 et pour la mise en oeuvre du procédé selon les revendications 6 à 12, caractérisé en ce qu'il est prévu au moins un outil (3, 3a, 3b, 12, 13, 14,15, 25, 26, 27, 28) pour réaliser un rétrécissement respectif (6), qui s'étend perpendiculairement au plan du sac gonflable étalé, que le sac gonflable étalé (1) et l'outil (3, 3a, 3b, 12, 13, 14, 15, 25, 26, 27, 28) peuvent être déplacés l'un vers l'autre dans le plan du sac gonflable étalé et que des outils de pliage et/ou des outils en forme de poussoirs (5, 7, 8, 9, 10, 11) sont prévus, pour comprimer le sac gonflable à sa taille de rangement, au-dessus du sac gonflable étalé et/ou latéralement par rapport à ce dernier.

14. Dispositif selon la revendication 13, caractérisé en ce que l'outil s'étend au moins sur la hauteur du sac gonflable (1), dans sa position repliée.

15. Dispositif selon au moins l'une des revendications précédentes, caractérisé en ce qu'un outil respectif en forme de poignard (3, 3a, 3b, 12, 13, 14, 15) est prévu pour produire un rétrécissement respectif (6, 6a, 6b, 17, 18, 19, 20).

16. Dispositif selon au moins l'une des revendications précédentes, caractérisé en ce qu'un outil respectif en forme de fil (25, 26, 27, 28) est prévu pour l'obtention d'un rétrécissement respectif.

17. Dispositif selon au moins l'une des revendications précédentes, caractérisé en ce qu'un espace pour le pliage du sac gonflable est prévu entre une plaque de recouvrement inférieure (43) et une plaque de recouvrement supérieure (44), dont l'une est mobile, que l'outil en forme de poignard (3) s'étend entre les plaques de revêtement et perpendiculairement à ces dernières, que l'espace pour le pliage du sac gonflable est limité latéralement par des poussoirs (45 à 48), qui sont déplaçables entre les plaques de recouvrement, qu'une ouverture est présente dans la plaque de recouvrement inférieure (43) pour un boîtier d'airbag (50) et qu'à côté de cette ouverture il est prévu au moins un poussoir (55) déplaçable perpendiculairement aux plaques de recouvrement, et que dans la plaque de couverture supérieure (44) il est prévu, dans la zone du boîtier (50) de l'airbag, une ouverture, dans laquelle est disposé un piston de tassement (53) qui peut être déplacé par rapport aux plaques de couverture et être retiré et dans lequel est présent un dispositif de retenue en position (54) déplaçable perpendiculairement aux plaques de couverture.

18. Dispositif selon la revendication 17, caractérisé en ce que le dispositif de retenue en position (54) possède, perpendiculairement à la direction de déplacement, approximativement la section transversale d'une cheminée (52) d'un diffuseur (51) inséré dans le boîtier (50) de l'airbag.
